# EUROPEAN PATENT APPLICATION

(11) **EP 2 020 354 A2**
(43) Date of publication of application: **04.02.2009**
(21) Application number: 07123392.8
(22) Date of filing: 17.12.2007
(51) Int. Cl.: B61B 12/00, B61D 27/00

(54) **Gondola lift with cooling system**

(30) Priority: 30.07.2007 TW 96212451 U
(71) Applicant: Chen, Tien-Sheng, Beitou District 112 Taipei City, Taiwan (CN)
(72) Inventor: Chen, Tien-Sheng, Beitou District 112 Taipei City, Taiwan (CN)
(74) Representative: Viering, Jentschura & Partner

(57) **Abstract**

The present invention provides a gondola lift (1) having a capacity for at least one passenger, the gondola lift comprising a cabin (10) and a cooling system (20) installed in the cabin, wherein the cooling system comprises: a porous case (21) having a plurality of holes (21h); a block of ice disposed in the case; a liquid container (25) connected to the case for housing the liquid melted from the block of ice; and an atomizer (27) for atomizing the liquid melted from the block of ice.

## Description

### BACKGROUND OF THE INTENTION

### 1. Field of the Invention

The present invention relates to a cooling system-containing gondola lift and more particularly to a gondola lift with a low-energy-consumption integrated cooling system.

### 2. Description of the Related Art

Finally, the highly-anticipated Maokong Gondola has begun providing service in Taipei. During the first few weeks of operation, different suggestions have arisen from people who ridden in it, in hopes of improving the overall operation of the gondola lift system. Among all the comments, discomfort caused by hot weather is a frequent complaint.

Indeed, anyone sitting in the cabin of a gondola lift without an air-conditioning system in sweltering heat may find the experience less than enjoyable. In the times we live in, when global warming is resulting in unprecedented temperature increases, it is almost taken for granted that a vehicle shall be equipped with an air-conditioning system. Considering the unpleasant experience of being locked in a cabin with poor ventilation for approximately twenty minutes, people are becoming more reluctant to ride in the gondola lift.

A survey of the gondola lifts around the world reveals that gondola cabins are rarely equipped with air conditioners. This absence of air conditioning can be attributed to the fact that many gondola lifts are located in countries at higher latitudes. Since the average temperatures in these countries are correspondingly lower, air conditioning is often excluded from the design of gondola lifts. Since the Maokong gondola lifts have been transplanted in Taiwan without necessary modifications, they have inevitably failed to fit the needs of the Taiwanese public.

Since cooling functions were seldom considered in the early stages of gondola lift design, research and inventions in this area are rare. One invention worth mention is Japanese patent No. 10-16768. In that invention, a solid state carbon dioxide (dry ice) feeder is provided in the station of a gondola lift, while a dry ice generation-cum-storage space and a cooling box with a solid state carbon dioxide inlet and a cooling air outlet are installed in the cabin. At the station, solid state carbon dioxide is blown into the cooling box of the gondola lift from the solid state carbon dioxide feeder via the inlet, causing dry ice to form in the cooling box. This dry ice cools air during operation of the cable car, and the cooled air is fed into the cabin.

In view of the continuing global warming phenomenon, demands for a gondola lift equipped with an air-conditioning system are sure to increase. Accordingly, it is desirable to provide a cooling system capable of working with low, if not completely nonexistent, energy consumption so as to increase the enjoyment of taking a gondola lift.

### SUMMARY OF THE INVENTION

It is therefore an object of the present invention to provide a low-energy-consumption, pollution-free cooling system adaptable to a gondola lift.

It is another object of the present invention to provide a low-energy-consumption integrated cooling system.

To achieve the aforementioned objects, this invention provides a cooling system-containing gondola lift having a capacity for at least one passenger, the gondola lift comprising a cabin and a cooling system installed in the cabin, wherein the cooling system comprises: a porous case having a plurality of holes; and a block of ice disposed in the case.

In this invention, the cooling system utilizes a block of ice as a means to produce cooled air, so the amount of pollution produced is extremely low. In addition, the production of the block of ice may be carried out at night, a period during which lower electricity rates are charged, so as to minimize the energy costs of the cooling system. With the wind created by the movement of the gondola lift, the cooling system of this invention may cool the air passing through the block of ice and provide cooled air for the cabin of the gondola lift, lowering the temperature therein.

In most cases, the cooling system may be without limitation disposed at a specific position, such as in the space behind the ventilation openings of the cabin, so that it is capable of cooling the air blowing into the cabin from the ventilation openings. In addition, the ventilation openings may be formed on the windward side of the cabin; more particularly, they may be formed without limitation in the upper part of the cabin.

In addition, to cause more air to enter the block of ice and increase the cooling efficiency, a channel may be formed in the block of ice; thus, when air enters the cabin and the holes in the case of the cooling system, it may then pass through the channel in the block of ice and be cooled thereby.

Also, the present invention may further comprise a liquid container connected to the case for collecting the liquid melting from the block of ice. A switchable drainage exit may be disposed at the bottom of the liquid container so that station personnel may drain the liquid into a proper container for re-use or disposal.

This invention also provides a cooling system-containing gondola lift having a capacity for at least one passenger, the gondola lift comprising a cabin and a cooling system installed in the cabin, wherein the cooling system comprises: a liquid container containing liquid therein; and an atomizer for atomizing the liquid in the liquid container. Because the surface area of the liquid may be largely increased by atomization, the evaporation rate of the liquid may be increased; therefore, heat may be dissipated more efficiently from the cabin. (For example, one gram of water may absorb at least 540 calories from its surroundings.)

It should be noted that the atomizer of this invention may be chosen from any device capable of miniaturizing liquid and increasing the surface area thereof. It may be, but is not limited to, an ultrasonic, a spray-type, or a vortex atomizer.

Additionally, solar energy may be used as the energy source of the atomizer. A solar panel and a battery electrically connected thereto may be provided on the top of the cabin so that the atomizer or other facilities may be operated under the power from the battery.

Furthermore, to provide an integrated cooling system, this invention also provides a cooling system-containing gondola lift having a capacity for at least one passenger, the gondola lift comprising a cabin and a cooling system installed in the cabin, wherein the cooling system comprises: a porous case having a plurality of holes; a block of ice disposed in the case; a liquid container connected to the case for housing the liquid melted from the block of ice; and an atomizer for atomizing the liquid melted from the block of ice.

Other objects, advantages, and novel features of the invention will become more apparent from the following detailed description when taken in conjunction with the accompanying drawings.

### BRIEF DESCRIPTION OF THE DRAWINGS

These and other objects and advantages of the present invention will become apparent from the following description of the accompanying drawings, which disclose several embodiments of the present invention. It is to be understood that the drawings are to be used for purposes of illustration only, and not as a definition of the invention.

In the drawings, wherein similar reference numerals denote similar elements throughout the several views:
FIG. 1 is an illustration of one embodiment of the cooling system-containing gondola lift of this invention.
FIG. 2 shows the partial exploded view of one embodiment of the cooling system-containing gondola lift of this invention.
FIG. 3 shows the sectional view of one embodiment of the cooling system-containing gondola lift of this invention.
FIG. 4 is an illustration of another embodiment of the cooling system-containing gondola lift of this invention.

### DETAILED DESCRIPTION OF THE PREFERRED EMBODIMENT

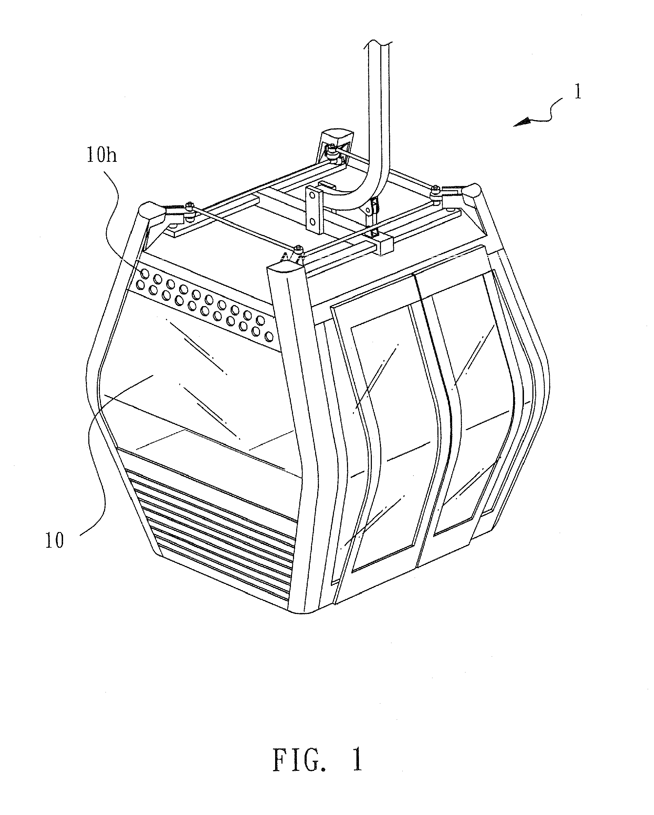

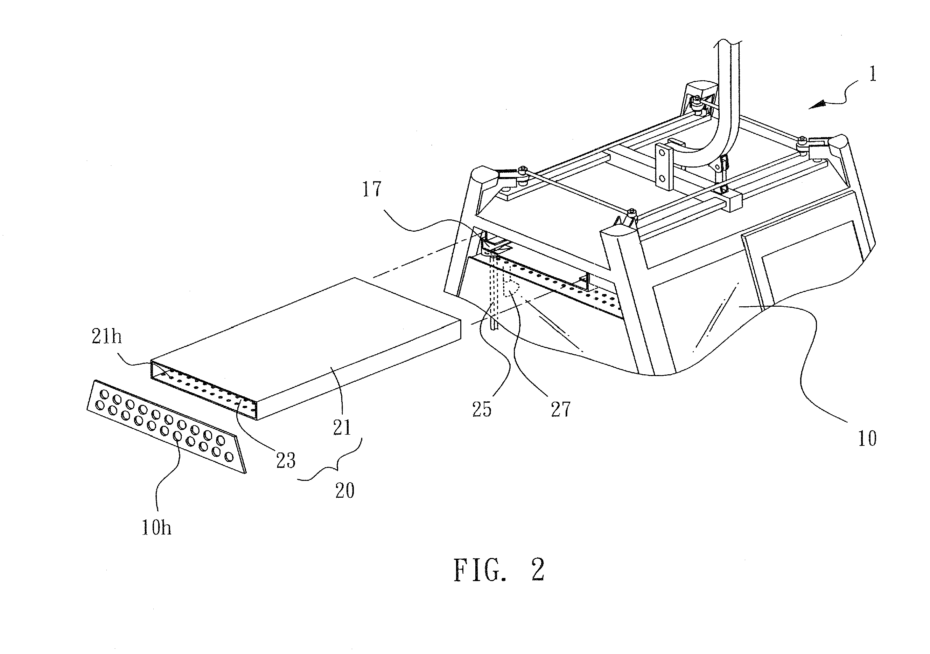

Please refer to FIG. 1 for an illustration of one embodiment of the cooling system-containing gondola lift 1 (abbreviated as "gondola lift 1" hereafter) of this invention. The cabin 10 of the gondola lift 1 has a plurality of ventilation openings 10h through which wind blows into the cabin 10 when the gondola lift 1 is moving. Please also take FIG. 2, a partial exploded view of one embodiment of the gondola lift 1 of this invention, for reference. The gondola lift 1 of this invention further comprises a cooling system 20 installed in the cabin 10, the cooling system 20 comprising a porous case 21 having a plurality of holes 21h; and a block of ice 23 disposed in the case 21. In most situations, the cooling system 20 is dismountably installed without limitation at the upper part of the space in the cabin 10, especially adjacent to the roof. In addition, the part of the cabin 10 with the ventilation openings 10h may have an openable structure so that the cooling system 20, when installed, may be directly pushed into the cabin 10 and disposed at a position where it is capable of cooling the air blowing into the cabin 10 from the ventilation openings 10h. The installation of the cooling system 20, without limitation, may be achieved by the provision of a slide track 17 in the cabin 10. In addition, the cooling system 20 may further comprise a liquid container 25 connected to the case 21 for housing the liquid melted from the block of ice 23.

Meanwhile, the cooling system 20 may further comprise an atomizer 27 for atomizing the liquid melted from the block of ice 23 and lowering the temperature in the cabin 10. Thus, it is apparent that the cooling system 20 of this invention may provide multiple cooling means so as to lower the temperature in the cabin 10.

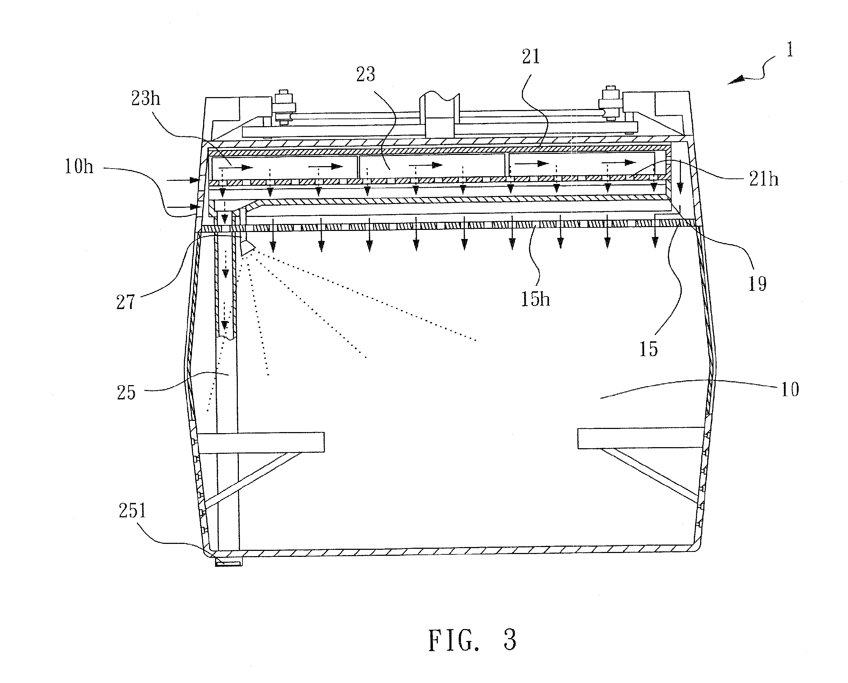

Please refer to FIG. 3 for the sectional view of one embodiment of the gondola lift 1 of this invention. As shown, the gondola lift 1 comprises a cabin 10 and a cooling system 20 installed in the cabin 10, wherein the cooling system 20 comprises: a porous case 21 having a plurality of holes 21h; a block of ice 23 disposed in the case 21; a liquid container 25 connected to the case 21 for housing the liquid melted from the block of ice 23; and an atomizer 27 for atomizing the liquid melted from the block of ice 23. When the gondola lift 1 is moving, air may enter the cooling system 20 from the ventilation openings 10h formed on the cabin 10. In this invention, the block of ice 23 may comprise a channel 23h, through which the air may flow and therein be cooled. When the cooled air leaves the case 21, it may descend onto a compartment board 15 installed in the cabin 10 and enter the cabin via a plurality of cooled air holes 15h formed on the compartment board 15.

On the other hand, as the block of ice 23 gradually melts, the liquid produced may drop from the holes 21h in the case 21 and fall onto a liquid bearing board 19 having a partial inclination design. Then the liquid will pass through the atomizer 27 and/or enter the liquid container 25. The liquid container 25 has a switchable drainage exit 251 disposed at the bottom, and the switchable drainage exit 251 is preferably disposed outside the cabin 10. Accordingly, when the gondola lift 1 arrives at the station, personnel may manually or mechanically open the switchable drainage exit 251 and drain the liquid in the liquid container 25. The atomizer 27 may also atomize the low-temperature liquid so as to lower the temperature in the cabin 10.

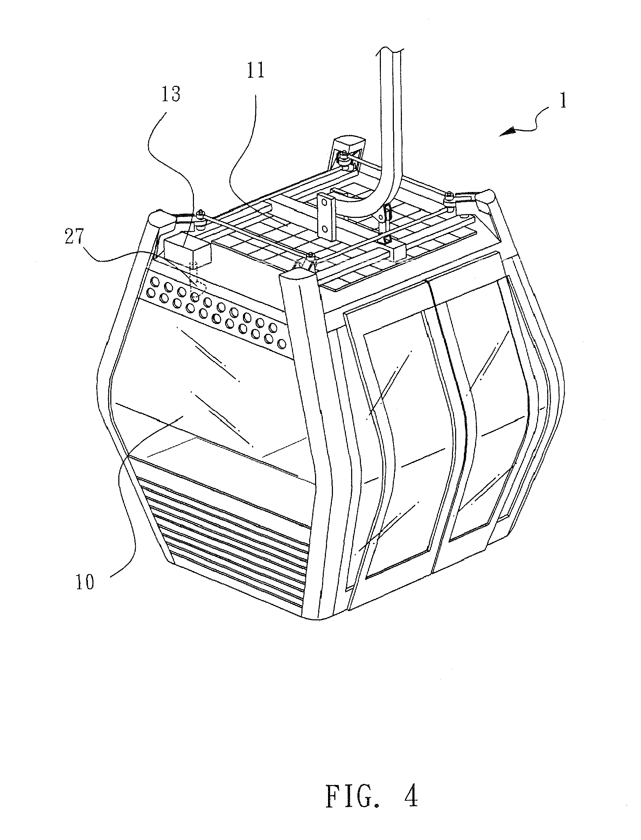

Finally, refer to FIG. 4 for an illustration of another embodiment of the gondola lift 1 of this invention. In order to provide the gondola lift 1 with a power supply, a solar panel 11, which is electrically connected to a battery 13, is installed on the top of the cabin 10. Thus, operated in an environment with sunlight, the solar panel 11 and the battery 13 may convert the sunlight into electronic power and provide this power for use by the facilities in the gondola lift 1. For example, the atomizer 27 may be electrically connected to the battery 13; the public address system in the cabin 10 may also be connected to the battery 13, largely increasing the utility of the present invention.

It will be understood that many other modifications can be made to the various disclosed embodiments without departing from the spirit and scope of the invention. For these reasons, the above description should not be construed as limiting the invention, but should be interpreted as merely exemplary of preferred embodiments.

## Claims

1. A cooling system-containing gondola lift having a capacity for at least one passenger, the gondola lift comprising a cabin and a cooling system installed in the cabin, wherein the cooling system comprises:
a porous case having a plurality of holes; and
a block of ice disposed in the case.

2. The gondola lift as claimed in claim 1, wherein the cabin comprises a plurality of ventilation openings, and the cooling system is so disposed that it is capable of cooling the air blowing into the cabin from the ventilation openings.

3. The gondola lift as claimed in claim 1, wherein the block of ice has a channel by which the air may be cooled when it passes through said channel.

4. The gondola lift as claimed in claim 1, wherein the cooling system further comprises a liquid container connected to the case for housing the liquid that melts from the block of ice.

5. The gondola lift as claimed in claim 4, wherein the bottom of the liquid container comprises a switchable drainage exit exposed outward.

6. The gondola lift as claimed in claim 1, wherein the cooling system is dismountably installed in the upper part of the space in the cabin.

7. The gondola lift as claimed in claim 1, further comprising a solar panel and a battery electrically connected thereto disposed on top of the cabin.

8. The gondola lift as claimed in claim 7, wherein the cooling system further comprises an atomizer electrically connected to the battery for atomizing the liquid that has melted from the block of ice.

9. The gondola lift as claimed in claim 1, wherein the cabin further comprises a compartment board for separating the case of the cooling system and the passenger compartment.

10. The gondola lift as claimed in claim 9, wherein the compartment board comprises a plurality of cooled air holes.

11. A cooling system-containing gondola lift having a capacity for at least one passenger, the gondola lift comprising a cabin and a cooling system installed in the cabin, wherein the cooling system comprises:
a liquid container containing liquid therein; and
an atomizer for atomizing the liquid in the liquid container.

12. The gondola lift as claimed in claim 11, wherein the bottom of the liquid container comprises a switchable drainage exit exposed outward.

13. The gondola lift as claimed in claim 11, wherein the cooling system further comprises:
a porous case connected to the liquid container, the case having a plurality of holes; and
a block of ice disposed in the case.

14. The gondola lift as claimed in claim 13, wherein the cabin comprises a plurality of ventilation openings, and the cooling system is so disposed that it is capable of cooling the air blowing into the cabin from the ventilation openings.

15. The gondola lift as claimed in claim 13, wherein the block of ice has a channel by which the air may be cooled when it passes through said channel.

16. The gondola lift as claimed in claim 11, further comprising a solar panel and a battery electrically connected thereto disposed on the top of the cabin.

17. The gondola lift as claimed in claim 16, wherein the atomizer is electrically connected to the battery.

18. A cooling system-containing gondola lift having a capacity for at least one passenger, the gondola lift comprising a cabin and a cooling system installed in the cabin, wherein the cooling system comprises:
a porous case having a plurality of holes;
a block of ice disposed in the case;
a liquid container connected to the case for housing the liquid melted from the block of ice; and
an atomizer for atomizing the liquid melted from the block of ice.
